# EUROPEAN PATENT APPLICATION

(11) **EP 2 196 114 A1**
(43) Date of publication of application: **16.06.2010**
(21) Application number: 07123247.4
(22) Date of filing: 14.12.2007
(51) Int. Cl.: A47J 31/36

(54) **Domestic appliance**

(71) Applicant: Koninklijke Philips Electronics N.V., 5621 BA Eindhoven (NL)
(72) Inventor: The designation of the inventor has not yet been filed
(74) Representative: Smilde-Westmaas, Mariëtte Johanna

(57) **Abstract**

The invention relates to a domestic appliance with a lid (20). Underneath the lid (20) a filter (22) is arranged during operation, and in the domestic appliance a medium can be heated. After heating of the medium a cooling down phase takes place in the appliance, and an under-pressure is generated by means of which the filter is pressed against the lid. This causes the filter to stick to the lid, and renders it more difficult to remove the filter (22) from the lid (20). Due to the high restoring force of a shape memory material at high temperatures an ejector spring (21) made of the shape memory material is pressing the filter (22) away from the lid (20).

## Description

### FIELD OF THE INVENTION

The invention relates to the field of domestic appliances.

### BACKGROUND OF THE INVENTION

A domestic appliance is known which comprises a lid and in which a medium can be heated. The domestic appliance is arranged to receive a filter underneath the lid. Such a domestic appliance is for example a cup-by-cup coffeemaker, which has a holder that is arranged to receive a filter, in this case a pad comprising a beverage material. During operation the holder with the pad is present in the appliance, the pad is covered by the lid and heated water flows through the pad to create a hot beverage. After heating of the medium a cooling down phase takes place in the appliance, and an under-pressure is generated by means of which the filter is pressed against the lid. This often causes the pad to stick on the lid which results in a more difficult removal of the pad which is less user-friendly. In the state of the art an ejector spring is used to remove the filter from the lid, but the ejector spring is generally too weak to effectively remove the filter from the lid.

It is an object of the invention to provide a domestic appliance in which the removal of the filter from the lid by the ejector spring is improved.

### SUMMARY OF THE INVENTION

The invention achieves the aforementioned object by means of a domestic appliance with a lid and being arranged to receive a filter which can be placed underneath the lid and which can be removed from the lid by an ejector spring, whereas the ejector spring is fabricated of a shape memory material that provides a higher restoring force at higher temperatures and a lower restoring force at lower temperatures. When the medium in the domestic appliance is heated the ejector spring is also heated up. Hence the restoring force of the ejector spring is rising. Therefore the ejector spring is able to push the filter away from the lid. Consequently the filter cannot stick to the lid even when the temperature of the medium is cooling down. So removing the filter from the lid is no problem anymore. Since the restoring force of the ejector spring is decreasing when the temperature of the medium is cooling down the lid can be closed easily without problems.

In a preferred alternative the shape memory material is a shape memory alloy. Shape memory alloys are showing a good corrosion resistance. This can be very important when the medium is a fluid.

Very good experiences concerning corrosion resistance are existing when the shape memory alloy is a nickel titanium alloy. Also copper aluminum nickel alloys have proved of value. In addition copper aluminum beryllium alloys and copper zinc aluminum alloys can be used as alternatives.

The shape memory material can also be a shape memory polymer.

Since the shape memory materials are used in the field of domestic appliances the transformation temperature at which the ejector spring is changing its shape can be in a range from 50°C up to 85°C. In practice very good results were reached with a transformation temperature in a range between 65°C and 75°C.

The ejector spring can be a leaf spring with a buckling between its ends. This is a very simple and cheap solution. This spring construction is preferably made of a shape memory material with a one-way memory effect.

In another preferred embodiment the ejector spring is a leaf spring which has beneath the transformation temperature a flat shape and above the transformation temperature a curved shape. This spring construction can remove the filter very reliably from the lid at temperatures above the transformation temperature. At a temperature beneath the transformation temperature the lid can be closed easily because the leaf spring then has returned to its flat shape. This leaf spring can be realized in the best way with a shape memory material with a two-way memory effect.

The ejector spring can have a V-shape. This spring construction is also a very simple one. Therefore it can be cheaply produced. This spring construction is also preferably made of a shape memory material with a one-way memory effect.

The ejector spring can also be a spiral spring. The spiral spring can remove the filter from the lid reliably. When the temperature is decreased the spiral spring doesn't hamper the closing of the lid. Also in this embodiment the shape memory material has proved of value when it has a one-way memory effect.

The ejector spring can be heated electrically. So it is independent of the temperature of the medium. This spring construction is preferred when the temperature of the medium will remain on a lower level. Even in this case the ejector spring can work in the desired manner.

To protect the filter against damaging a plate can be fixed on the ejector spring, whereas the plate is located between the ejector spring and the filter.

To fabricate the plate cheaply in high numbers the plate can be fabricated of plastics.

A preferred application of the inventive domestic appliance is the usage as a coffeemaker.

### BRIEF DESCRIPTION OF THE DRAWINGS

For better understanding, the invention will be explained in more detail with reference to the following drawings.
In the drawings:
Fig. 1 shows a perspective view of a domestic appliance;
Figs. 2a - c show a side view of a first embodiment of an ejector spring in different operating states;
Figs. 3a, 3b show a side view of a second embodiment of the ejector spring in different operating states;
Figs. 4a, 4b show a side view of the third embodiment of the ejector spring in different operating states;
Figs. 5a, 5b show a side view of a fourth embodiment of the ejector spring in different operating states;
Fig. 6 shows a side view of a fifth embodiment of the ejector spring.

### DETAILED DESCRIPTION OF THE INVENTION

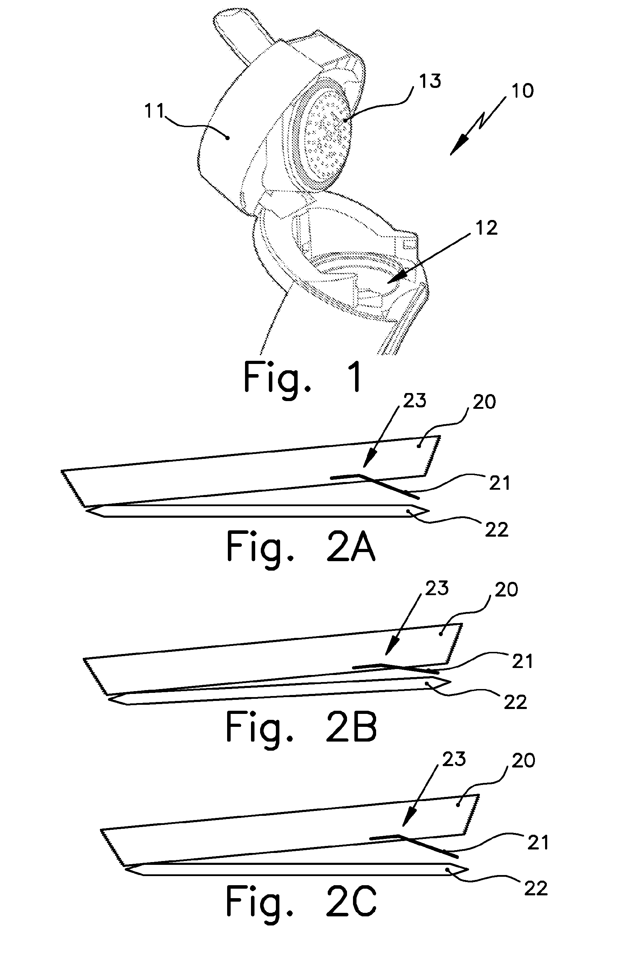

Fig. 1 shows a domestic appliance 10 with a lid 11 that can be closed and opened. In this embodiment the appliance is a cup-by-cup coffeemaker, which has a holder that is arranged to receive a filter, in this case a pad comprising a beverage material (not shown in Figure). During operation the holder with the pad is present in the appliance at 12, the pad is covered by the lid 11 and heated water flows through the pad to create a hot beverage. After creation of the beverage, the pad can be pushed away from the lid 11 by an ejector spring 13.

Figs. 2a, 2b and 2c show a lid 20 on which an ejector spring 21 is mounted. The ejector spring 21 is pushing away a filter 22 from the lid 20. The ejector spring 21 is fabricated of a shape memory material, which is in the shown case a shape memory alloy, for instance a nickel titanium alloy. The ejector spring 21 has between its ends a buckling 23.

In the operating state of fig. 2a the lid 20 is opened and the ejector spring 21 is at least almost relaxed and has ambient temperature. Therefore the lattice of the nickel titanium alloy is in a martensitic state. In this operating state the ejector spring 21 holds the filter 22 apart from the lid 20. Consequently the filter 22 can be removed very easily by a user.

Fig. 2b shows the operating state in which the lid 20 is closed. The ejector spring 21 has an ambient temperature. By closing the lid 20 the ejector spring 21 is compressed, whereas the lattice of the shape memory alloy is still within the martensitic state. The ejector spring 21 is made of a shape memory alloy with a one-way memory effect. Since in the martensitic state the shape memory alloy has only a lower restoring force the lid 20 can be closed very well without problems.

By heating up the medium within the domestic appliance above a transformation temperature the ejector spring 21 is also heated up. On the transformation temperature the lattice is transformed to an austenitic state (see fig. 2c). In the austenitic state the ejector spring 21 returns to its original undeformed shape and generates a higher restoring force. Hence it can press the filter 22 away from the lid 20. Even when the medium within the domestic appliance is cooling down the decreasing restoring force of the ejector spring 21 is strong enough to hold the filter 22 apart from the lid 20. So the developing low-pressure of the cooling down period cannot press the filter 22 against the lid 20.

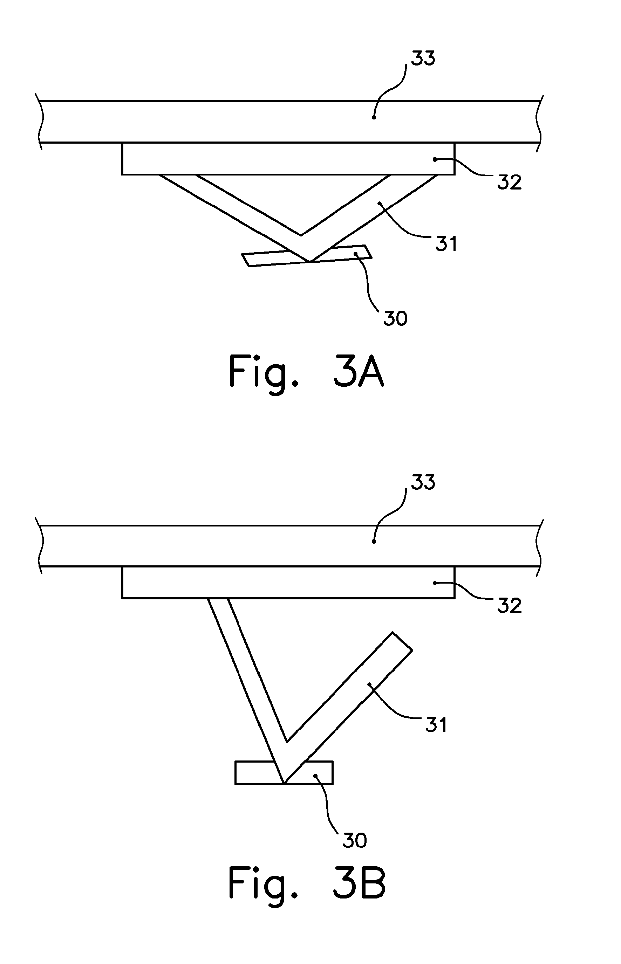

Figs. 3a and 3b show a schematically illustrated lid 30, an ejector spring 31 and a plate 32. The ejector spring 31 is V-shaped and is located between the lid 30 and the plate 32. The ejector spring 31 is made of a shape memory alloy with a one-way memory effect. The plate 32 is avoiding damaging of a filter 33.

Fig. 3 a shows the ejector spring 31 at ambient temperature on which the lattice of the shape memory alloy is in the martensitic state wherefore the restoring force of the ejector spring 31 is low.

Fig. 3b shows the ejector spring 31 at a temperature above the transformation temperature wherefore the lattice of the shape memory alloy is in the austenitic state. Therefore the spring has returned to its original undeformed shape and the restoring force of the ejector spring 31 is high. Thus the ejector spring 31 is able to press the filter 33 away from the lid 30.

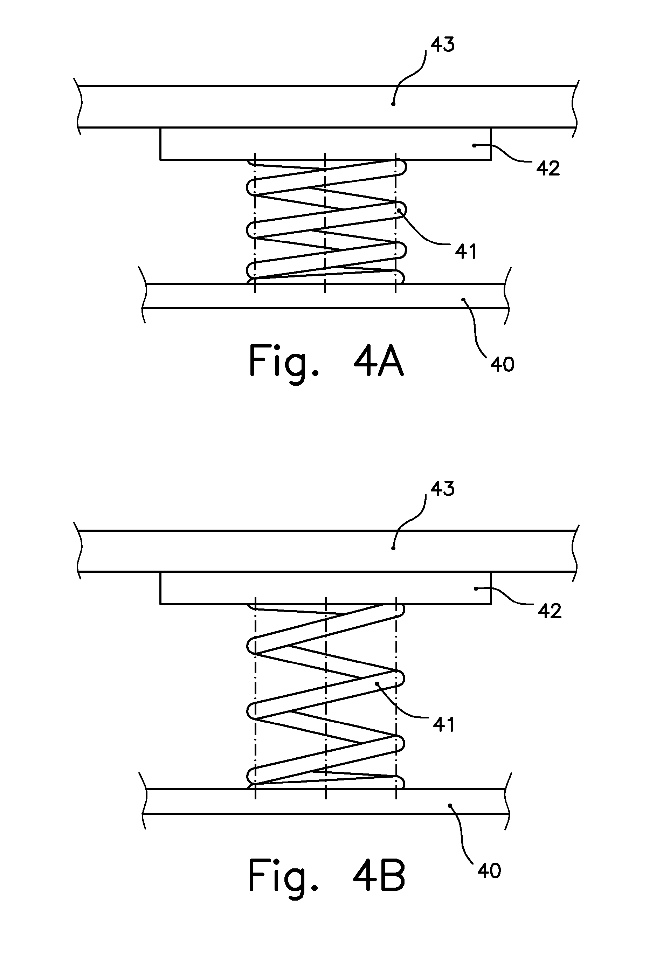

Figs. 4a and 4b schematically show a lid 40, an ejector spring 41 and a plate 42. The ejector spring 41 is a spiral spring and is made of a shape memory alloy with a one-way memory effect. The plate 42 is also protecting a filter 43.

Fig. 4a shows the ejector spring 41 at ambient temperature when the restoring force of the ejector spring 41 is low.

The ejector spring 41 at a temperature above of the transformation temperature is shown in fig. 4b. As shown here the restoring force of the ejector spring 41 is high wherefore the ejector spring 41 is able to press the filter 43 away from the lid 40.

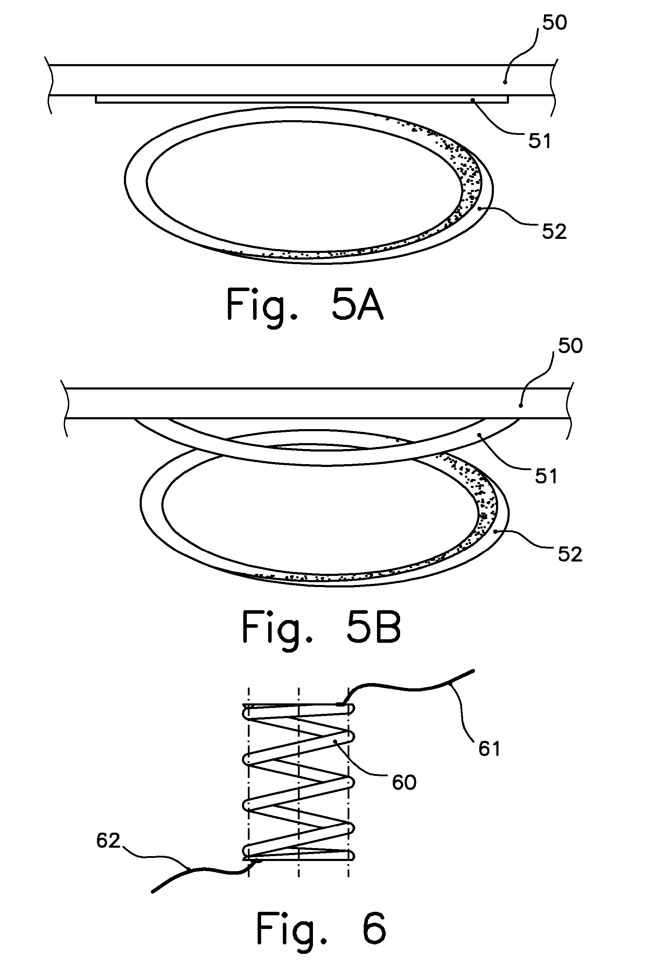

Figs. 5a and 5b show a lid 50, an ejector spring 51 and a filter 52. The ejector spring 51 is made of a shape memory alloy with a two-way memory effect.

The ejector spring 51 is shown at ambient temperature in fig. 5a. At ambient temperature the ejector spring 51 has a flat shape and the shape memory alloy is in the martensitic state when the restoring force of the ejector spring 51 is low. Since the shape memory alloy has a two-way memory effect the ejector spring 51 is becoming flat during the cooling down period. Thus an external force is not necessary to make the ejector spring 51 flat.

Fig. 5b shows the ejector spring 51 above the transformation temperature. On the transformation temperature it gets a curved shape. When the ejector spring 51 has a curved shape the shape memory alloy is in the austenitic state when the restoring force is high. Therefore the ejector spring 51 can press the filter 52 away from the lid 50.

An electrically heated ejector spring 60 is shown in fig. 6. The ejector spring 60 has two electrical connections 61 and 62. In addition the ejector spring 60 is made of a shape memory alloy. Because it can be heated electrically it is independent of the temperature of the medium within the domestic appliance. The electrically heated ejector spring 60 is preferred when the temperature of the medium is always on a lower level. Therefore even in this case the properties of the shape memory alloy can be used.

It is clear to the person skilled in the art that the scope of application of the present invention is not limited to the examples mentioned above, but rather a number of additions and modifications to the invention are possible without departing from the scope of application of the present invention as defined in the appended claims.

## Claims

1. Domestic appliance (10) with a lid (11, 20, 30, 40, 50) and being arranged to receive a filter (22, 33, 43, 52) which can be placed underneath the lid (11, 20, 30, 40, 50) and
which can be removed from the lid (11, 20, 30, 40, 50) by an ejector spring (13, 21, 31, 41, 51, 60)
whereas the ejector spring (13, 21, 31, 41, 51, 60) is fabricated of a shape memory material that provides a higher restoring force at higher temperatures and a lower restoring force at lower temperatures.

2. Domestic appliance (10) as claimed in claim 1, **characterized in that** the shape memory material is a shape memory alloy.

3. Domestic appliance (10) as claimed in claim 2, **characterized in that** the shape memory alloy is a nickel titanium alloy.

4. Domestic appliance (10) as claimed in claim 1, **characterized in that** the shape memory material is a shape memory polymer.

5. Domestic appliance (10) as claimed in one of the claims 1 to 4, **characterized in that** the transformation temperature is between 50°C and 85°C.

6. Domestic appliance as claimed in one of the claims 1 to 5, **characterized in that** the ejector spring (21) is a leaf spring with a buckling (23) between its ends.

7. Domestic appliance as claimed in one of the claims 1 to 5, **characterized in that** the ejector spring (51) is a leaf spring which has beneath the transformation temperature a flat shape and above the transformation temperature a curved shape.

8. Domestic appliance as claimed in one of the claims 1 to 5, **characterized in that** the ejector spring (31) is V-shaped.

9. Domestic appliance as claimed in one of the claims 1 to 5, **characterized in that** the ejector spring (41) is a spiral spring.

10. Domestic appliance as claimed in one of the claims 1 to 9, **characterized in that** the ejector spring (60) can be heated electrically.

11. Domestic appliance as claimed in one of the claims 1 to 10, **characterized in that** a plate (32, 42) is fixed on the ejector spring (31, 41), whereas the plate (32, 42) is located between the ejector spring (31, 41) and the filter (33, 43).

12. Domestic appliance as claimed in claim 11, **characterized in that** the plate (32, 42) is fabricated of plastics.

13. Domestic appliance (10) as claimed in one of the claims 1 to 12, **characterized in that** it is a coffeemaker.
